(19) Europäisches Patentamt
European Patent Office
Office européen des brevets

(11) Veröffentlichungsnummer: **0 413 222 A2**

(12) # EUROPÄISCHE PATENTANMELDUNG

(21) Anmeldenummer: **90115019.3**

(51) Int. Cl.5: **C08L 81/02**

(22) Anmeldetag: **04.08.90**

(30) Priorität: **17.08.89 DE 3927137**

(43) Veröffentlichungstag der Anmeldung:
**20.02.91 Patentblatt 91/08**

(84) Benannte Vertragsstaaten:
**DE FR GB IT**

(71) Anmelder: **BAYER AG**

**D-5090 Leverkusen 1 Bayerwerk(DE)**

(72) Erfinder: **Reuter, Knud, Dr.**
**Scheiblerstrasse 99**
**D-4150 Krefeld(DE)**
Erfinder: **Weymans, Günther, Dr.**
**Karl-Arnold-Strasse 4**
**D-5090 Leverkusen(DE)**
Erfinder: **Westeppe, Uwe, Dr.**
**Vogelskamp 72**
**F-4020 Mettmann(DE)**
Erfinder: **Idel, Karsten-Josef, Dr.**
**Am Schwarzkamp 38**
**D-4150 Krefeld(DE)**
Erfinder: **Freitag, Dieter, Dr.**
**Hasenheide 10**
**D-4150 Krefeld 1(DE)**

(54) **Polyarylensulfid-Mischungen.**

(57) Die Erfindung betrifft gasdurchlässige, vorzugsweise für Schwefeldioxid besonders gut durchlässige Polyarylensulfid-Mischungen, enthaltend 95 bis 99,8 Teile Polyarylensulfid, 5 bis 0,2 Gewichtsteile Bisphenole mit speziellen cycloaliphatischen Seitengruppen und/oder Polymere auf Basis von wenigstens 20 Mol.-% dieser Bisphenole sowie gegebenenfalls 0 bis 80 Gewichtsteile bekannte Additive wie Weichmacher, Füllstoffe oder Verstärkungsstoffe. Weiterhin betrifft die Erfindung ein Verfahren zur Herstellung der Mischungen und ihre Verwendung als geformte Körper.

EP 0 413 222 A2

# POLYARYLENSULFID-MISCHUNGEN

Die Erfindung betrifft gasdurchlässige, vorzugsweise für Schwefeldioxid besonders gut durchlässige Polyarylensulfid-Mischungen, enthaltend 95 bis 99,8 Teile Polyarylensulfid, 5 bis 0,2 Gewichtsteile Bisphenole mit speziellen cycloaliphatischen Seitengruppen und/oder Polymere auf Basis von wenigstens 20 Mol.-% dieser Bisphenole sowie gegebenenfalls 0 bis 80 Gewichtsteile bekannte Additive wie Weichmacher, Füllstoffe oder Verstärkungsstoffe. Weiterhin betrifft die Erfindung ein Verfahren zur Herstellung der Mischungen und ihre Verwendung als geformte Körper.

Gegenstand der Erfindung sind Mischungen, enthaltend

a) 95 bis 99,8 Gewichts-Teile Polyarylensulfid (PAS), vorzugsweise Polyphenylensulfid (PPS) und

b) 5 bis 0,2 Gewichts-Teile Polymere und/oder Oligomere auf Basis der Bisphenole der Formel (I) und/oder Bisphenole der Formel (I) selbst,

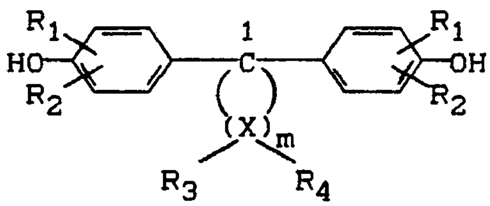

(I),

in welcher

$R_1$ und $R_2$ unabhängig voneinander Wasserstoff, Halogen (Cl, Br), $C_1$-$C_8$-Alkyl, $C_5$-$C_6$-Cycloalkyl, $C_6$-$C_{10}$-Aryl, $C_7$-$C_{12}$-Aralkyl und $C_7$-$C_{12}$-Alkylaryl bedeuten,

m für die Zahlen 4, 5, 6 oder 7 steht,

$R_3$ und $R_4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R_3$ und $R_4$ gleichzeitig Alkyl ist,

sowie gegebenenfalls

c) 0 bis 80 Gewichts-Teile weitere Additive.

In der DE-A 3 832 396 sind die Ausgangsprodukte der Formel (I) sowie Beispiele für erfindungsgemäß verwendbare Polymere, nämlich (Co-)Polycarbonate beschrieben.

In der DE-A 3 833 386 sind Polyetherketone auf Basis der Bisphenole (I) beschrieben, in der DE-A 3 833 385 sind Polyethersulfone auf Basis der Bisphenole (I) beschrieben.

Ausgangsprodukte für die Polycarbonate, Polyetherketone und Polyethersulfone sind Dihydroxydiphenylcycloalkane der Formel (I). Bevorzugt sind an 1-2 Atomen X, insbesondere nur an einem Atom X, $R_3$ und $R_4$ gleichzeitig Alkyl. Bevorzugter Alkyl-Rest ist Methyl. Die X-Atome in alpha-Stellung zu dem Diphenyl-substituierten C-Atom (C-1) sind bevorzugt nicht dialkylsubstitiert. Eine Alkyldisubstitution in beta-Stellung zu C-1 ist bevorzugt. Bevorzugt sind Dihydroxydiphenylcycloalkane mit 5 und 6 Ring-C-Atomen im cycloaliphatischen Rest (m = 4 oder 5 in Formel (I)), beispielsweise die Diphenole der Formeln

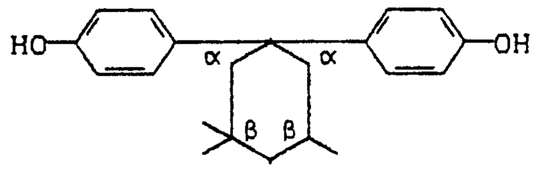

(II),

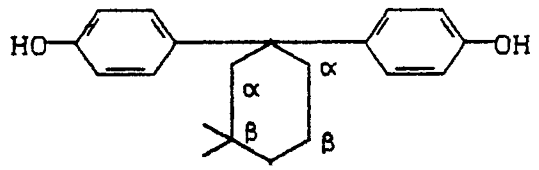

(III),

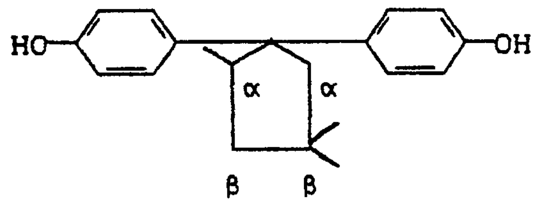

(IV).

1,1-Bis-(4-hydroxyphenyl)-3,3,3-trimethylcyclohexan (II) ist besonders bevorzugt.

Die Diphenole der Formel (I) können für sich - ohne als Polymer eingesetzt zu werden - in dem angegebenen Gewichtsbereich eingesetzt werden. Es können für diesen Fall noch bis zu weiteren 5 Gewichts-Teilen andere Diphenole mit zugegeben werden.

Die Diphenole der Formel (I) können aber auch zur Herstellung von Polymeren verwendet werden, die ihrerseits als Komponente (b) - gegebenenfalls mit einem Gemisch aus Diphenolen (I) - eingesetzt werden können.

Polymere aus solchen Diphenolen sind Polycarbonate, Polyetherketone und Polyethersulfone.

Es können auch Gemisohe der Diphenole (I) mit anderen bekannten Diphenolen zur Herstellung der erfindungsgemäß verwendbaren Polymere (b) eingesetzt werden. Auch diesen Copolymeren (statistisch oder Block-) können - bis zu den angegebenen Gewichtsteilen - Diphenole der Formel (I) selbst zugemischt werden. Weiterhin können auch beliebige Mischungen dieser verschiedenen Polymere (z.B. Polycarbonat/Polyethersulfon-Mischungen) als Komponente (b) verwendet werden. Die Komponente und/oder Polymere (b) enthält Diphenole der Formel (I) auf Basis der Diphenole der Formel (I). Copolymere sind dann bevorzugt, wenn sie aus wenigstens 20 Mol.-% Diphenolen der Formel (I) bestehen.

Die Molekulargewichte der erfindungsgemäß verwendbaren Komponenten (b) können vom Molekulargewicht des reinen Diphenols bis hin zu hochmolekularen Polymeren, also bis hin zu Molekulargewichten oberhalb 300.000 g/mol reichen. Auch Oligomere und Mischungen der Oligomeren mit hochmolekularen Polymeren sind verwendbar Zur Vermeidung von unerwünschten Ausdampfungen sind Polymere mit einem Molekulargewicht von 10.000 bis 250.000 g/mol (Gewichtsmittel $M_w$, gemessen beispielsweise mit der Gelpermeationschromatographie) bevorzugt. Insbesondere sind Molekulargewichte zwischen 15.000 und 230.000 g/mol bevorzugt. Die chemische Uneinheitlichkeit $u_n = M_w/M_n - 1$ kann bis zu 20 betragen.

Erfindungsgemäß können beliebige Mischungen der Polymere Polyetherketon, Polyethersulfon, Polycarbonat und Diphenole (I) - zusammen 5 bis 0,2 Gewichtsteile - als Komponente (b) verwendet werden. Dies können folglich Einzelkomponenten, binäre Mischungen, ternäre Mischungen sowie Mischungen aller vier Komponenten untereinander sein. Bevorzugt sind die Einzelkomponenten selbst, von denen wiederum die Polymere, insbesondere die (Co-)Polycarbonate, bevorzugt sind.

Andere Diphenole für die Komponente (b) sind Diphenole der Formel (V)

HO-Z-OH (V),

in welcher

Z ein aromatischer Rest mit 6 bis 50 C-Atomen ist, der einen oder mehrere aromatische Reste enthalten kann, substituiert sein kann und aliphatische Reste oder andere cycloaliphatische Reste als die der Formel (I) oder Heteroatome als Brückenglieder enthalten kann.

Geeignete Diphenole sind z.B.

Hydrochinon,

Resorcin,

Dihydroxidiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis-(hydroxyphenyl)-diisopropylbenzole,
sowie deren kernalkylierte und kernhalogenierte Verbindungen. Diese und weitere geeignete andere Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 050, 2 063 052, 2 211 956, der FR-A 1 561 518 und in der Monographie "H. Schnell, Chemistry and Physics of Polycarbonates, Interscience Publishers, New York, 1964, beschrieben.

Bevorzugte Diphenole sind
Hydrochinon,
4,4′-Dihydroxydiphenylether,
4,4′-Dihydroxybenzophenon,
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan.

Ganz besonders bevorzugt ist 2,2-Bis-(4-hydroxyphenyl)-propan (Bisphenol A).

Die Herstellung der Diphenole (I) sowie der (Co-)Polycarbonate ist im Detail der DE-A 3 832 396 zu entnehmen. Die Herstellung der beiden anderen Polykondensate entnimmt man der DE-A 3 833 385 bzw. DE-A 3 833 386.

Im folgenden sind die Herstellverfahren für die Diphenole (I) sowie die Polymeren (b) nochmals beschrieben.

Polymere (b) sind beispielsweise Polycarbonate, Polyetherketone, Polyethersulfone.

Die Dihydroxydiphenylcycloalkane der Formel (I) können in an sich bekannter Weise durch Kondensation von Phenolen der Formel (VI)

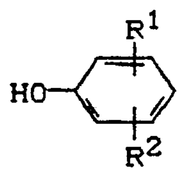

(VI),

und Ketonen der Formel (VII)

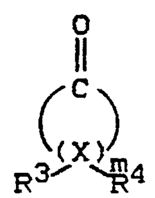

(VII),

hergestellt werden, wobei in den Formeln (VI) und (VII) X, $R^1$, $R^2$, $R^3$, $R^4$ und m die für Formel (I) angegebene Bedeutung haben.

Die Phenole der Formel (VI) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 -77, Verlag Chemie-Weinheim-New York 1978; für Chlorphenole, Ullmanns Encyklopädie der technischen Chemie, 4. Auflage, Verlag Chemie, 1975, Band 9, Seiten 573-582; Alkylphenole, Ullmanns Encyklopädie der technischen Chemie, 4. Auflage, Verlag Chemie 1979, Band 18, Seiten 191-214).

Beispiele für geeignete Phenole der Formel (VI) sind: Phenol, o-Kresol, m-Kresol, 2,6-Dimethylphenol,

2-Chlorphenol, 3-Chlorphenol, 2,6-Dichlorphenol, 2-Cyclohexylphenol, Phenylphenole und o- oder p-Benzylphenole.

Die Ketone der Formel (VII) sind literaturbekannt (siehe beispielsweise Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488, 1490 und 1491, US-PS 2 692 289, Allen et al., J. Chem. Soc., (1954), 2186, 2191 und J. Org. Chem. Vol. 38, No. 26, (1973), Seiten 4431 ff, J. Am. Chem. Soc. 87 , (1965), Seite 1353 ff, insbesondere Seite 1355). Ein allgemeines Verfahren zur Herstellung von Ketonen der Formel (VII) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VII) sind:
3,3-Dimethylcyclopentanon, 2,2-Dimethylcyclohexanon, 3,3-Dimethylcyclohexanon, 4,4-Dimethylcyclohexanon, 3-Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetra methylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

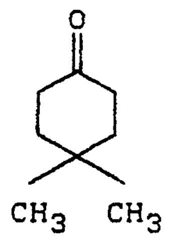
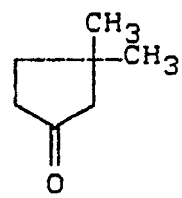

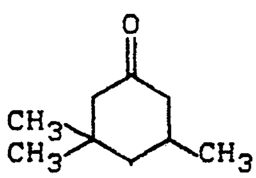 , 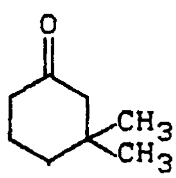 und 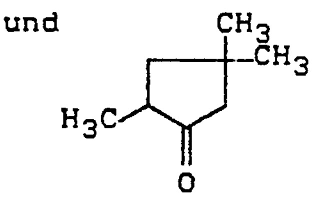

Zur Bisphenolherstellung werden im allgemeinen 2 bis 10 Mol, vorzugsweise 2,5 bis 6 Mol Phenol (VI) pro Mol Keton (VI), verwendet. Bevorzugte Reaktionszeiten betragen 1 bis 100 Stunden. Im allgemeinen arbeitet man bei Temperaturen von -30° C bis 300° C, vorzugsweise von -15° C bis 150° C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen,

Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzu setzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol (VI) und Keton (VII) im Molverhältnis (VI) : (VII) zwischen 2:1 und 10:1, vorzugsweise zwischen 2,5 : 1 und 6 : 1 bei Temperaturen zwischen -30 °C und 300 °C, vorzugsweise zwischen -15 °C und 150 °C und bei Drücken von 1 bis 20 bar, vorzugsweise von 1 bis 10 bar in Anwesenheit saurer Katalysatoren und gegebenenfalls in Anwesenheit von Co-Katalysatoren und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in α-Stellung zu dem di-phenylsubstituierten C-Atom (C-1) sind bevorzugt nicht dialkylsubstituiert, dagegen ist die Disubstitution mit Alkyl in β-Stellung in C-1 bevorzugt.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Ein zelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert.

Die Polycarbonate (b) können gemäß der DE-A 3 832 396 aus Diphenolen der Formel (I) hergestellt werden.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VIII), zur Herstellung von hochmolekularen, thermoplastischen, aromatischen Polycarbonaten verwendet werden.

Geeignete andere Diphenole der Formel HO-Z-OH (VIII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VIII) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis(hydroxyphenyl)-diisopropylbenzole
sowie deren kernalkylierte und kernhalogenierte Verbindungen.

Diese und weitere geeignete andere Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 0956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,

2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl )-propan.

Besonders bevorzugte Diphenole der Formel (VIII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VIII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol% anderem Diphenol und 5 Mol% (I) zu 95 Mol% anderem Diphenol und insbesondere zwischen 100 Mol%(I) zu 0 Mol% anderem Diphenol und 10 Mol% (I) zu 90 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol liegen.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol% (bezogen auf eingesetzte Diphenole), an drei-oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4',4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (a) dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IX) geeignet

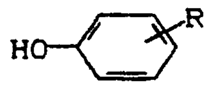 (IX),

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate (b) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VIII), eingesetzt. Zur Regulierung des Molekulargewichtes können Kettenabbrecher z.B. der Formel (IX) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0° C und 40° C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VIII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VIII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate (b) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder wahrend oder auch nach der Phosgenierung zugesetzt werden.

Die Polycarbonate (b) können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate (b) haben bevorzugt Molekulargewichte $\overline{M}$ w (Gewichtsmittel, ermittelt durch Gelchromatographie nach vorheriger Eichung) von mindestens 10 000, besonders bevorzugt von 10 000 bis 200 000 und insbesondere von 20 000 bis 80 000. Sie können linear oder verzweigt sein, sie sind Homopolycarbonate oder Copolycarbonate auf Basis der Diphenole der Formel (I).

Geeignete Polymere (b) sind auch aromatische Polyetherketone mit der wiederkehrenden Struktureinheit

$-O-E-O-E'-$ (X),

worin

$-E'-$ ein zweibindiger Rest eines aromatischen Ketons der Formel (XI)

$$-Ar-\underset{\underset{O}{\|}}{C}-Ar'- \qquad (XI),$$

mit

Ar und Ar′ gleiche oder verschiedene difunktionelle aromatische Reste mit 6 bis 50 C-Atomen
und worin
-O-E-O- (XII),
ein zweibindiger Diphenolat-Rest ist, die dadurch gekennzeichnet sind, daß von 0,1 Mol% bis 100 Mol%, vorzugsweise von 3 Mol% bis 100 Mol% und insbesondere von 10 Mol% bis 100 Mol% der Diphenolat-Reste (XII) solche der Formel (I a)

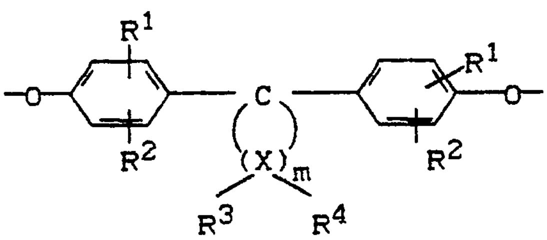

(I a),

sind, in denen X, $R^1$, $R^2$, $R^3$, $R^4$ und m wie in Formel (I) definiert sind.

Die aromatischen Polyetherketone haben bevorzugt mittlere Molekulargewichte $\overline{M}_w$ (Gewichtsmittel), ermittelt z.B. durch Gelpermeationschromatographie oder Lichtstreuung von 742 bis 500.000, vorzugsweise von 3.000 bis 200.000 und insbesondere von 5.000 bis 100.000.

Aromatische Polyetherketone sind bekannt (siehe beispielsweise GB-A 1 078 234, US-A 4 010 147 und EP-A 0 135 938). Sie können beispielsweise durch Umsetzung von Dialkalisalzen von Diphenolen mit Dihalogen-diarylketonen in einem polaren Lösungsmittel hergestellt werden, (siehe beispielsweise GB-PS 1 078 234), wobei die Dialkalisalze der Diphenole auch in situ erzeugt werden können.

Die Polyetherketone können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituierte Pyrrolidone, wie N-Methylpyrrolidon, N,N-Dimethylformamid, N,N-Dimethylacetamid, Dimethylsulfoxid, Dimethylsulfon, Sulfolan und Tetramethylharnstoff eingesetzt werden. Es können anteilig, z. B. 0,1 bis 200 Gew.-%, bezogen auf das Gewicht des polaren Lösungsmittels, andere weniger polare Lösungsmittel mitverwendet werden, z.B. aromatische Kohlenwasserstoff, wie Toluol, Xylol, Mesitylen, Chlorbenzol oder aliphatische Kohlenwasserstoffe wie Benzine, Cyclohexan.

Geeignete Diphenole der Formel (VIII) sind z.B.
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis(hydroxyphenyl)-diisopropylbenzole
sowie deren kernalkylierte und kernhalogenierte Verbindungen.

Diese und weitere geeignete andere Diphenole (VIII) sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 0956, der FR-A 1 561 518 und in der Monographie "H. Schnell, Chemistry and Physics of Polycarbonates, Interscience Publishers, New York 1964", beschrieben.

Bevorzugte andere Diphenole (VIII) sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,

Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4′-Dihydroxydiphenylsulfon.

Besonders bevorzugte andere Diphenole (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
4,4′-Dihydroxydiphenylsulfon.

Sie können einzeln oder im Gemisch eingesetzt werden.

Die Formel (XII) stellt die durch Entfernen von 2 H-Atomen gebildeten Reste dieser Diphenole bzw. die Alkalisalze dieser Verbindung dar.

Geeignete Dihalogendiarylketone sind:
4,4′-Dichlorbenzophenon
4-Chlor-4′-fluorbenzophenon
4,4′-Difluorbenzophenon
4,4′-Dichlorterephthalophenon

= 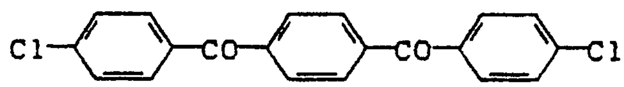

4,4′-Difluorterephthalophenon

= 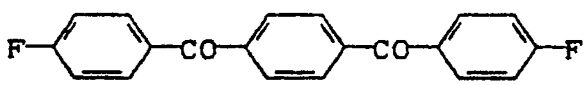

4,4′-Dichlorisophthalophenon

= 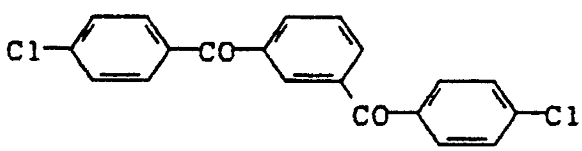

4,4′-Difluorisophthalophenon

= 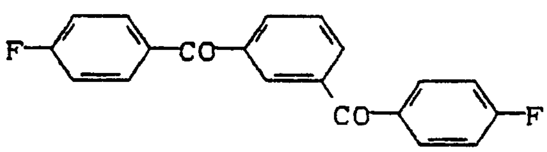

4,4′-Bis-(p-chlorbenzoyl)-diphenylether

= 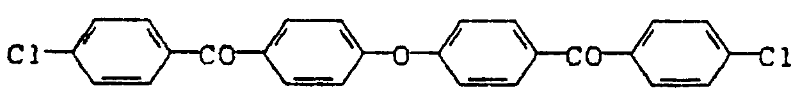

4,4′-Bis-(p-fluorbenzoyl)-diphenylether

= 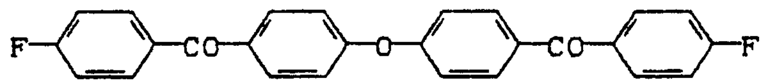

3,3′-Dinitro-4,4′-dichlorbenzophenon
3,3′-Dinitro-4,4′-difluorbenzophenon
4,4′-Bis-(p-chlorbenzoyl)-biphenyl

= 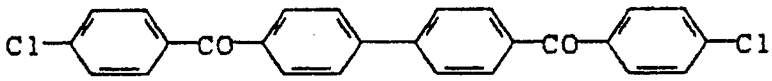

4,4′-Bis-(p-fluorbenzoyl)-biphenyl

= 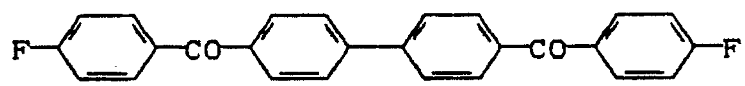

2,8-Bis-(p-chlorbenzoyl)-diphenylenoxid

= 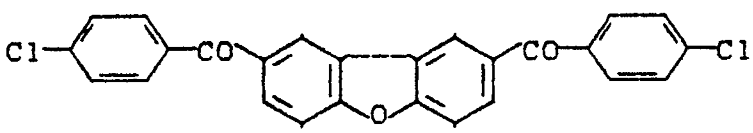

4,4′-Bis-(p-halogenbenzoyl)-diphenylmethan-derivate der Formel

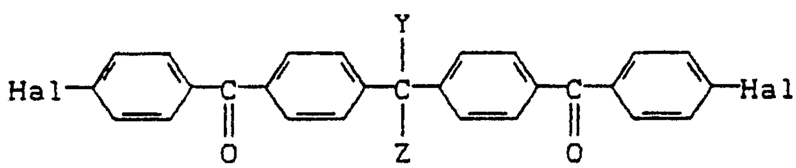

mit Y, Z als gleichen oder verschiedenen $C_1$-$C_9$-aliphatischen, $C_5$-$C_6$-cycloaliphatischen, $C_6$-$C_{10}$-aromatischen oder $C_7$-$C_{12}$ araliphatischen Resten oder Wasserstoff und Hal = Fluor oder Chlor, z. B.

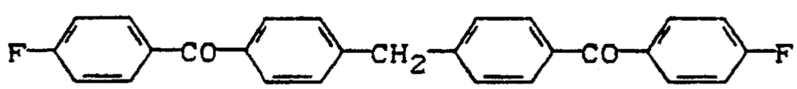

Der bevorzugte Rest Ar und Ar′ in der Formel (XI) ist somit der p-Phenylenrest, der auch substituiert sein kann, z.B. mit Alkyl oder Nitrogruppen substituierte p-Phenylenreste oder Reste der Formel

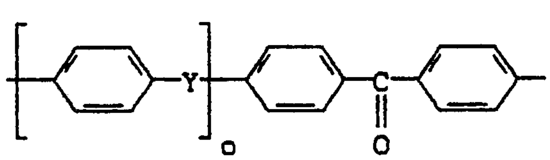

mit y = -O-, $CH_2$, -CO-, Einfachbindung und O = 0 oder 1 und Hal = Fluor oder Chlor.

Als Alkali in den Dialkaliphenolaten dient vorzugsweise Natrium oder Kalium.

Als Halogen in den Dihalogendiarylketonen (VIII) dient Fluor, Chlor und Brom, vorzugsweise Fluor und Chlor.

Bevorzugte Polyetherketone sind solche, die mindestens 10 Mol-% wiederkehrende Struktureinheiten der Formel

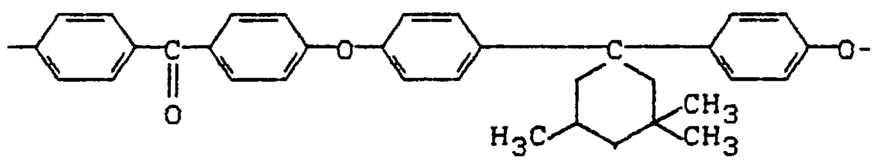

enthalten und ein Molekulargewicht von über 3000 g/mol aufweisen (Gewichtsmittel).

Die aromatischen Polyetherketone können bei Temperaturen von 130 °C bis 350 °C, bevorzugt 145 °C bis 280 °C, und bei Druck von 0,8 bis 10 bar, bevorzugt 1 bis 3 bar, insbesondere bei atmosphärischem Umgebungsdruck hergestellt werden.

Das molare Mengenverhältnis der Alkalidiphenolate zu den Dihalogen-diaryl-ketonen (XI) liegt zwischen 0,5 und 2, bevorzugt zwischen 0,8 und 1,2, besonders bevorzugt zwischen 0,95 und 1,05, wobei für hohe Molekulargewichte ein Verhältnis von 1 oder sehr nahe bei 1 gewählt werden muß.

Die Menge an polaren Lösungsmitteln beträgt 0,5 bis 50, bevorzugt 2 bis 20 Gewichtsteile, bezogen auf das Gesamtgewicht der Polyetherketonrohstoffe ( = 1 Gew.-Teil).

Die Polyetherketone können z. B. wie folgt aus den erhaltenen Reaktionsgemischen gewonnen werden:

Man verdünnt das Reaktionsgemisch, insbesondere wenn sehr hochviskose Lösungen vorliegen, z. B. mit dem polaren Reaktions-Lösungsmittel oder einem anderen Lösungsmittel für das Polyetherketon, und filtriert. Nach Neutralisation des Filtrats mit einer geeigneten Säure, z.B. Essigsäure, wird das Polyetherketon durch Eingießen in ein geeignetes Fällungsmedium, z. B. Wasser oder Alkohole, wie z. B. Methanol oder Isopropanol oder Wasser-Alkohol-Gemische, z. B. $H_2O$/Methanol 1 : 1, ausgefällt, isoliert und anschließend getrocknet.

Geeignete Polymere (b) sind auch aromatische Polyethersulfone mit der wiederkehrenden Struktureinheit

-O-E-O-E'- (XIII),

worin -E- ein zweibindiger Rest eines aromatischen Sulfons der Formel (XIV)

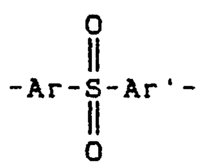 (XIV),

mit Ar und Ar' = gleiche oder verschiedene difunktionelle aromatische Reste mit 6 bis 50-C-Atomen und worin

-O-E-O- (XV),

ein zweibindiger Diphenolat-Rest ist, die dadurch gekennzeichnet sind, daß von 0,1 Mol% bis 100 Mol%, vorzugsweise von 3 Mol% bis 100 Mol% und insbesondere von 10 Mol% bis 100 Mol% der Diphenolat-Reste (XV) solche der Formel (Ia)

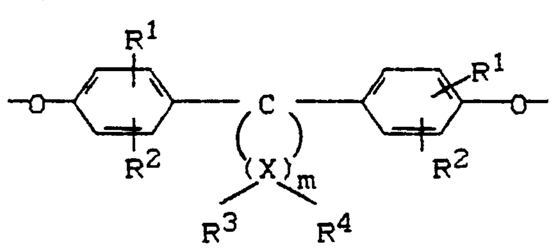 (I a),

sind, worin X, $R^1$, $R^2$, $R^3$, $R^4$ und m wie in Formel (I) definiert sind.

Die aromatischen Polyethersulfone (b) haben bevorzugt mittlere Molekulargewichte $\overline{M}_w$

(Gewichtsmittel) von 758 bis 500 000, insbesonders von 3 000 bis 200 000 und speziell von 5 000 bis 100 000.

Aromatische Polyethersulfone sind bekannt (siehe beispielsweise GB-A 1 078 234, US-A 4 010 147 und EP-A 0 135 938). Sie können beispielsweise durch Umsetzung von Dialkalisalzen von Diphenolen mit Dihalogen-diarylsulfonen in einem polaren Lösungsmittel hergestellt werden, (siehe beispielsweise GB-A 1 078 234), wobei die Dialkalisalze der Diphenole auch in situ erzeugt werden können.

Die Polyethersulfone (b) können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituierte Pyrrolidone, wie N-Methylpyrrolidon: N,N-Dimethylformamid, N,N-Dimethylacetamid, Dimethylsulfoxid, Diphenylsulfon, Sulfolan oder Tetramethylharnstoff, eingesetzt werden. Es können anteilig z.B. 0,1 bis 200 Gew.-%,bezogen auf das Gewicht des polaren Lösungsmittels andere weniger polare Lösungsmittel mitverwendet werden,z.B. aromatische Kohlenwasserstoffe wie Toluol, Xylol, Mesitylen, Chlorbenzol, oder aliphatische Kohlenwasserstoffe wie Benzin, Cyclohexan.

Die Polyethersulfone mit der Struktureinheit (XIII) werden also durch Umsetzung von Dialkalidiphenolaten

Alkali-O-E-O-Alkali (XVI),

mit Dihalogen-diaryl-sulfonen (XIVa),

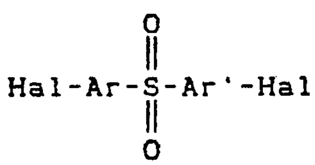

(XIVa),

worin Ar und Ar′ gleiche oder verschiedene difunktionelle aromatische Reste mit 6 bis 50 C-Atomen und Hal Halogen, bevorzugt Fluor, Chlor und Brom bedeuten, in polaren Lösungsmitteln umgesetzt, indem man von 0,1 Mol% bis 100 Mol%, vorzugsweise von 3 Mol-% bis 100 Mol-% und insbesondere von 10 Mol% bis 100 Mol% der Dialkalidiphenolate (XVI) der Formel Ib

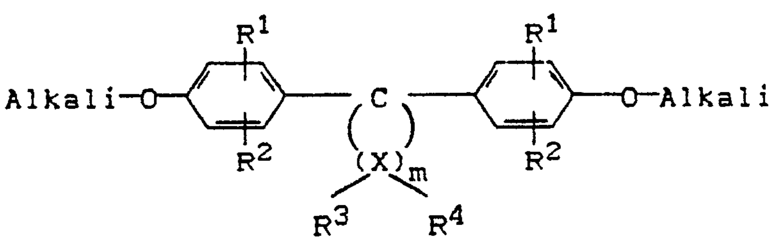

(I b),

entsprechen,

worin X, $R^1$, $R^2$,$R^3$, $R^4$ und m wie in Formel (I) definiert sind, verwendet und die Umsetzung in polaren Lösungsmitteln wie N-alkylierten Caprolactamen oder N-alkylierten Pyrrolidonen, vorzugsweise in N-alkylierten Pyrrolidonen durchführt.

Geeignete Diphenole sind z.B.

Hydrochinon,

Resorcin,

Dihydroxydiphenyle,

Bis-(hydroxyphenyl)-alkane,

Bis-(hydroxyphenyl)-cycloalkane,

Bis-(hydroxyphenyl)-sulfide,

Bis-(hydroxyphenyl)-ether,

Bis-(hydroxyphenyl)-ketone,

Bis-(hydroxyphenyl)-sulfone,

Bis-(hydroxyphenyl)-sulfoxide,

α,α′-Bis(hydroxyphenyl)-diisopropylbenzole

sowie deren kernalkylierte und kernhalogenierte Verbindungen.

Diese und weitere geeignete andere Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 0956, der Fr-A 1 561 518 und in der Monographie "H. Schnell, Chemistry and Physics of Polycarbonates4", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4′-Dihydroxydiphenylsulfon.

Besonders bevorzugte andere Diphenole sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan und
4,4′-Dihydroxydiphenylsulfon.

Sie können einzeln oder im Gemisch eingesetzt werden.

Die Formel (XV) und (XVI) stellen in durch Entfernen von 2 H-Atomen gebildeten Reste dieser Diphenole beziehungsweise die Alkalisalze dieser Verbindungen dar.

Geeignete Dihalogendiarylsulfone (XIII) sind z.B.
4,4′-Dichlordiphenylsulfon,
4,4′-Difluordiphenylsulfcn,
4-Chlor-4′-fluordiphenylsulfon,
3,3′-Dinitro-4,4′-dichlordiphenylsulfon,
3,3′-Dinitro-4,4′-difluordiphenylsulfon,
4,4′-Dibromdiphenylsulfon,

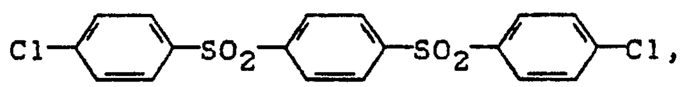

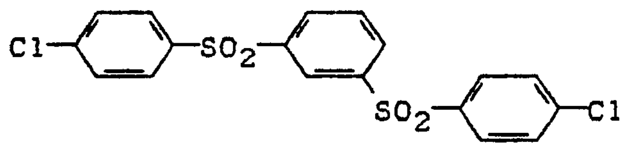

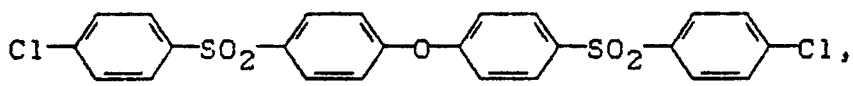

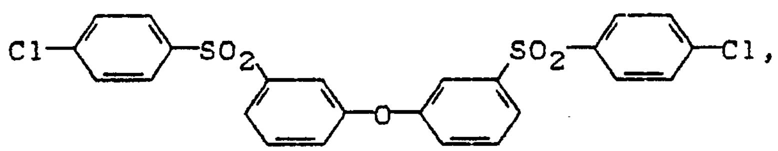

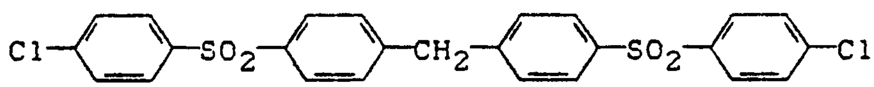

Bevorzugt sind demnach in Formel (XIII)

Ar und Ar' p-Phenylenreste oder mit Alkyl oder Nitrogruppen substituierte p-Phenylenreste oder Reste der Formel

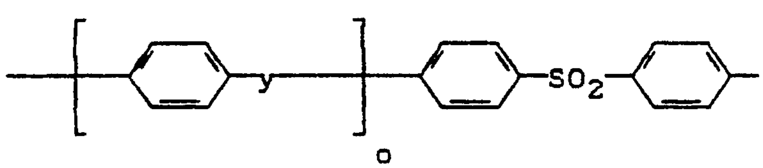

mit y = -O-, $-CH_2-$, $-SO_2-$, Einfachbindung und o = 0 oder 1
und Hal = Fluor, Chlor oder Brom.

Als Alkali in den Dialkaliphenolaten (Ib) und (XVI) dient vorzugsweise Natrium und Kalium.

Als Halogen in den Dihalogendiarylsulfonen dient vorzugsweise Chlor und Fluor, insbesondere Chlor.

Bevorzugte, erfindungsgemäße Polyethersulfone sind solche,die mindestens 10 Mol-% der wiederkehrenden Einheit

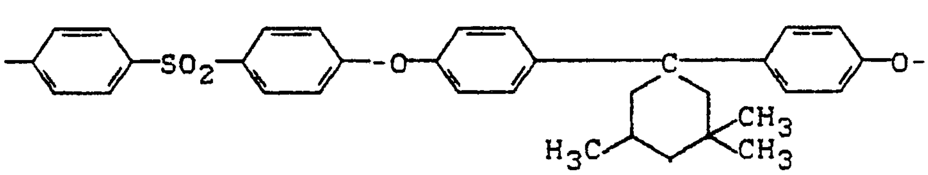

enthalten, und ein Molekulargewicht (Gewichtsmittel) von über 3000 g/mol aufweisen.

Die aromatischen Polyethersulfone (b) können bei Temperaturen von 130°C bis 320°C, bevorzugt 145°C bis 280°C und bei Drucken von 0,8 bis 10 bar, vorzugsweise 1 bis 3 bar,insbesondere bei atmosphärischem Umgebungsdruck hergestellt werden.

Das molare Mengenverhältnis der Alkalidiphenolate (I b) und (XVI) zu den Dihalogen-diaryl-sulfonen

(XIII) liegt zwischen 0,5 und 2, bevorzugt 0,8 und 1,2, besonders bevorzugt 0,95 und 1,05, wobei für hohe Molekulargewichte ein Verhältnis von 1 oder nahe bei 1 gewählt werden muß.

Die Menge an polaren Lösungsmitteln beträgt 0,5 bis 50, bevorzugt 2 bis 20 Gewichtsteile bezogen auf das Gesamtgewicht der Polyethersulfonbildungskomponenten.

Die Polyethersulfone (b) können wie folgt aus den erhaltenen Reaktionsgemischen gewonnen werden.

Man verdünnt das Reaktionsgemisch, insbesondere wenn sehr hochviskose Lösungen vorliegen, z.B. mit den polaren Reaktions-Lösemittel oder einem anderen Lösungsmittel für das Polyethersulfon, und filtriert. Nach Neutralisation des Filtrats mit einer geeigneten Säure, z.B. Essigsäure, wird das Polyethersulfon durch Eingießen in ein geeignetes Fällungsmedium, z.B. Wasser, Alkohole (wie z.B. Methanol, Isopropanol) oder Wasser-Alkohol-Gemische, z.B. $H_2O$/Methanol 1:1, ausgefällt, isoliert und anschließend getrocknet.

Erfindungsgemäß geeignete Polyarylensulfide, vorzugsweise Polyphenylensulfid, können lineare oder verzweigte Polyarylensulfide der Formel (XVII) sein

$(-S-Ar-)_n$ (XVII),

in welcher

-Ar- für eine $C_6$-$C_{30}$-Arylengrupe steht, die gegebenenfalls weitere Gruppen wie Carbonyl, Sulfon etc. enthalten kann.

Beispiele für Reste Ar sind p-Phenylen, m-Phenylen, o-Phenylen-Gruppen, alkylsubstituierte Phenylene, p,p′-Biphenylene-, p,p′-Diphenylether-, p,p′-Diphenylcarbonyl- oder höherwertige aromatische (Hetero)-cyclen wie beispielsweise Naphthalin. Gegebenenfalls können auch Beimengen von Disulfid-, Dibenzothiophen-, Thiantren-, Sulfonstrukturen und Verzweigern enthalten sein. Die erfindungsgemäß geeigneten Polyarylensulfide der Formel (XVII) können weiterhin in bekannter Weise mit bekannten Endgruppen modifiziert sein.

Die Polyarylensulfide sind bekannt (z.B. US-A 3 354 129, EP-A 171 021) und handelsüblich (z.B. Ryton®, Tedur®, Fortron®).

Bevorzugt haben die erfindungsgemäß geeigneten linearen oder verzweigten Polyarylensulfide mindestens zu 40 Gew.-%, bezogen auf das Gesamtgewicht der Komponente (a) Struktureinheiten der Formel (XVIII)

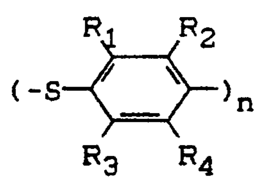

(XVIII),

in welcher

$R_1$ bis $R_4$ unabhängig voneinander sind oder gleich sind und für $C_1$-$C_6$-Alkyl, Phenyl oder Wasserstoff stehen.

Weiterhin können die Polyarylensulfide bevorzugt auch Biphenylen-, Diphenylketon und/oder Diphenylsulfon-Einheiten enthalten.

Gegebenenfalls enthalten die Mischungen auch Additive (c). Als Additive kommen erfindungsgemäß in Frage:

- anorganische oder organische Füllstoffe
- Fasern
- Nukleierungsmittel
- Schutz- und Farbstoffe etc.,

wie sie z.B. in Modern Plastics Encyclopedia 1988, Vol 66, No. 10A, S. 183 - 194 und S. 127 - 178, beschrieben sind.

Als Füllstofe sind insbesondere anorganische Füllstoffe geeignet, z.B. Keramikfüllstoffe wie Aluminiumnitrid, Silikate, Titandioxid, Talkum, Kreide, Glimmer, Ruß, Graphit, Glaskugeln u.s.w..Es können auch Fasern aus Glas, Kohlenstoff sowie Fasern aus Polymeren eingesetzt werden. Die Fasern sollten bei der üblichen Verarbeitungstemperatur der erfindungsgemäßen Mischungen nicht aufschmelzen und Zug-Elastizitätsmodule (gemessen im Zugversuch bei Raumtemperatur und einer Zuggeschwindigkeit von weniger als 10 cm/min) von mehr als 10 GPa, bevorzugt mehr als 18 GPa haben. Solche Polymerfasern sind beispielsweise Fasern aus vollaromatischen flüssigkristallinen Polymeren.

Nukleierungsmittel sind beispielsweise Bariumsulfat oder Titandioxid.

Diese Additive können entweder vor der Herstellung der erfindungsgemäßen Mischungen den Komponenten (a) oder (b) oder zusammen mit der Komponente (b) der Komponente (a) oder nachträglich den Mischungen aus (a) und (b) zugemischt werden. Ebenso können den Polycarbonaten der Komponenten (b) -vor oder während oder nach der Abmischung mit der Komponente (a) - die genannten Additive in den üblichen Mengen zugesetzt werden.

Die Mischungen enthalten - wie bereits beschrieben -
von 95 bis 99,8 Gewichts-Teile,
bevorzugt von 96 bis 99,5 Gewichts-Teile,
insbesondere von 96 bis 99 Gewichts-Teile Komponente (a),
von 5 bis 0,2 Gewichts-Teile,
bevorzugt von 4 bis 0,5 Gewichts-Teile,
insbesondere von 4 bis 1,0 Gewichts-Teile Komponente (b),
sowie gegebenenfalls
von 0 bis 80 Gewichts-Teile,
bevorzugt von 0 bis 75 Gewichts-Teile,
insbesondere von 0 bis 70 Gewichts-Teile Komponente (c).

Die Mischungen werden hergestellt, indem man die Ausgangskomponenten in an sich bekannter Weise bei Temperaturen von 250°C bis 450°C, bevorzugt von 260°C bis 430°C, insbesondere von 280°C bis 430°C, bei Schergefällen von 0,1 $s^{-1}$ bis 1000 $s^{-1}$, bevorzugt von 1 $s^{-1}$ bis 800 $s^{-1}$ durch inniges Vermischen, Extrudieren oder Kneten vermengt und anschließend gegebenenfalls granuliert und im Spritzguß weiterverarbeitet werden zu Formteilen.

Gegenstand der Erfindung ist auch ein Verfahren zur Herstellung der erfindungsgemäßen Mischungen aus den Komponenten (a), (b) und gegebenenfalls (c), dadurch gekennzeichnet, daß man die Einzelkomponenten (a) und (b) bei Temperaturen von 250°C bis 450°C bei Schergefällen von 0,1 $s^{-1}$ bis 1000 $s^{-1}$ durch Kneten, Extrudieren oder andere Methoden in an sich bekannten Vermischapparaturen vermengt.

Ein weiterer Gegenstand der vorliegenden Erfindung ist die Verwendung der Mischungen zur Herstellung geformter Körper.

Im Elektro- und Elektronikbereich, im Automobilbereich (KFZ-innen- und Außenausstattung), als Folien zur Abdeckung oder Umhüllung oder zum Schutze von anderen beliebigen Formteilen und als Fasern entweder als Verstärkungsmittel in anderen Polymeren oder zur Herstellung von Geweben sind diese geformten Körper einsetzbar.

Die aus den erfindungsgemäßen Mischungen hergestellten Formteile sind für Schwefeldioxid gut permeabel. Damit können eventuelle $SO_2$-Einschlüsse in Polyarylensulfiden - schon während der Herstellung der Formteile - ausgasen.

## Beispiele

Die Ausgasung eines Stoffes in einem Formteil läßt sich physikalisch durch die Permeation des ausgasenden Stoffes durch das Polymere beschreiben, aus dem das Formteil besteht.

Der Durchgang eines Gases durch eine dichte Polymermembran wird durch einen Lösungs-Diffusionsvorgang beschrieben. Die kennzeichnende Konstante für diesen Prozeß ist der Permeationskoeffizient P, der angibt, welches Gasvolumen V bei gegebener Druckdifferenz ΔP in einer bestimmten Zeit t durch eine Folie bekannter Fläche F und Dicke d hindurchtritt. Für den stationären Zustand läßt sich aus den Differentialgleichungen des Permationsvorgangs bekanntermaßen ableiten:

$$P = \frac{V \cdot d}{F \cdot t \cdot \Delta P}$$

Darüber hinaus ist die Permeation abhängig von der Temperatur und der Gasfeuchte.

Die Meßanordnung besteht aus einem thermostatisierten Zwei-Kammer-System. Die eine Kammer ist für die Aufnahme des Vorgabegases und die andere für die Aufnahme des Permeates ausgelegt. Die Kammern sind durch die zu messende Polymermembran getrennt. Der Druckanstieg in der Permeatkammer wird mit einem Druckaufnehmer, z.B. Baratron der Firma MKS, als Funktion der Zeit bis in den stationären Gasdurchgang registriert.

Der Permeationskoeffizient P wird in den Einheiten

$$[P] = \frac{cm^3 \cdot mm}{m^2 \cdot 24\ h \cdot 10^5\ Pa}$$

gemessen, wobei auf eine Membrandicke von 1mm bezogen wird. Weitere Meßparameter sind:
Temperatur: 25° C bei einer rel. Gasfeuchte von 0 %

Beispiel 1

Herstellung von 1,1-Bis-(4-hydroxyphenyl)-3,3,5-trimethylcyclohexan gemäß DE-A 3 832 396

In einem 1-Liter-Rundkolben mit Rührer, Tropftrichter, Thermometer, Rückflußkühler und Gasleitungsrohr werden 7,5 Mol (705 g) Phenol und 0,15 Mol (30,3 g) Dodecanthiol vorgelegt und bei 28 bis 30° C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60 - 90) und einmal mit Methylenchlorid heiß extrahiert und abfiltriert.
Ausbeute: 370 g
Schmelzpunkt: 205 bis 207° C

Beispiel 2

Herstellung von Polycarbonat aus Bisphenol des Beispiels 1 gemäß DE-A 3 832 396

30,94 g (0,1 Mol) des Diphenols aus Beispiel 1, 33,6 g (0,6 Mol) KOH und 560 g Wasser werden in einer Inertgas-Atmosphäre unter Rühren gelöst. Dann fügt man eine Losung von 0,188 g (2 Mol-%) Phenol in 560 g Methylenchlorid zu. In die gut gerührte Lösung wurden bei pH 13 bis 14 und 21 bis 25° C 189,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat hatte eine relative Lösungsviskosität, gemessen in Methylenchlorid bei T = 25° C und einer Polymerkonzentration von 5 g/l, sowie eine Glastemperatur nach DSC (Differential Scanning Calorimetry bei einer Aufheizrate von 20 K/min.) von 233° C

Beispiel 3

Herstellung eines Polyetherketons auf Basis des Diphenols aus Beispiel 1 gemäß DE-A 3 833 386.

In einer mit Stickstoff gespülten Rührapparatur, die mit einem Wasserabscheider ausgerüstet ist, werden 31,04 g (0,1 Mol) des Bisphenols aus Beispiel 1, 21,82 g 4,4'-Difluorbenzophenon, 200 ml N-Methyl-pyrrolidon, 100 ml Toluol und 18 g Kaliumcarbonat vorgelegt. Es wird destillativ azeotrop entwässert, bis der Ansatz wasserfrei ist, Durch Abdestillieren von Toluol wird die Sumpftemperatur innerhalb einer Stunde auf 180° C erhöht. Der Ansatz wird 4 Stunden bei 180° C gerührt und anschließend für 1 Stunde auf 190 - 195° C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1 : 1) daraus isoliert. Zur weiteren Reinigung wird das Polymer in Methylenchlorid gelöst und anschließend in Methanol gefällt. Abschließend wird 14 Stunden bei 120° C im Vakuum getrocknet.
Ausbeute: 37,6 g

relative Viskosität, gemessen in Methylenchlorid bei 25 °C und einer Polymerkonzentration von 5 g/Liter: 1,297 Glastemperatur, bestimmt mit Hilfe der DSC-Methode bei einer Aufheizgeschwindigkeit von 20 K/min: 223 °C

Beispiel 4

Herstellung eines Polyethersulfons auf Basis des Diphenols aus Beispiel 1 gemäß DE-A 3 833 385.

In einer mit Stickstoff gespülten Rührapparatur, die mit einem Wasserabscheider ausgerüstet ist, werden 31,04 g (0,1 Mol) des Bisphenols aus Beispiel 1, 28,72 g 4,4′-Dichlordiphenylsulfon, 200 ml N-Methyl-pyrrolidon, 100 ml Toluol und 18 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180 °C erhöht.

Der Ansatz wird 4 Stunden bei 180 °C gerührt und anschließend für 1 Stunde auf 190 - 195 °C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1 : 1) daraus isoliert. Zur weiteren Reinigung wird das Polymer in Methylenchlorid gelöst und anschließend in Methanol gefällt. Abschließend wird 14 Stunden bei 120 °C im Vakuum getrocknet.
Ausbeute: 35,8 g
relative Viskosität, gemessen wie in Beispiel 3: 1,19
Glastemperatur: 236 °C

Beispiel 5

Als Komponente (a) - Polyarylensulfid - wurde für die nachfolgenden erfindungsgemäßen Beispiele das nach EP-A 142 042, Beispiel 2, hergestellte Polyarylensulfid verwendet.

1. erfindungsgemäßes Beispiel

1 Gewichtsteil des Polycarbonats aus Beispiel 2 wird mit 99 Gewichtsteilen Polyarylensulfid aus Beispiel 5 in einem Kneter bei etwa 315 °C innig vermischt und aus der Mischung bei 275 °C unter einem Druck von 200 bar innerhalb 4 Minuten nach fünfminütiger Temperung bei 270 °C ein Formteil einer Dicke von 368 µm unter einer kreisförmigen Fläche von 5 cm$^2$ gepreßt. Die Permeabilität für $SO_2$ betrug 54,9 Standard-Einheiten.

2. erfindungsgemäßes Beispiel

1 Gewichtsteil des Polyetherketons aus Beispiel 3 wird mit 99 Gewichtsteilen Polyarylensulfid aus Beispiel 5 wie in dem erfindungsgemäßen Beispiel 1 vermischt und ein Formteil ähnlicher Größe, jedoch mit einer Dicke von 390 µm, gepreßt. Die Permeabilität für $SO_2$ betrug 9,1 Standard-Einheiten.

3. erfindungsgemäßes Beispiel

1 Gewichtsteil des Polyethersulfons aus Beispiel 4 wird mit 99 Gewichtsteilen Polyarylensulfid aus Beispiel 5 wie oben vermischt und ein Formteil ähnlicher Fläche, jedoch mit einer Dicke von von 411 µm, hergestellt. Die Permeabilität für $SO_2$ betrug 14,0 Einheiten.

Vergleichsbeispiel

Aus dem Polyarylensulfid nach Beispiel 5 wird bei 275 °C ein Formteil einer Dicke von 350 m und einer kreisähnlichen Fläche von etwa 5 cm$^2$ hergestellt und die Permeabilität für $SO_2$ gemessen. Sie betrug nur

5,8 Standard-Einheiten und ist gegenüber allen erfindungsgemäßen Beispielen deutlich verringert.

## Ansprüche

1. Mischungen enthaltend

a) 95 bis 99,8 Gewichts-Teile Polyarylensulfid,

b) 5 bis 0,2 Gewichts-Teile Polymere und/oder Oligomere, auf Basis der Bisphenole der Formel (I) und/oder Bisphenole der Formel (I) selbst,

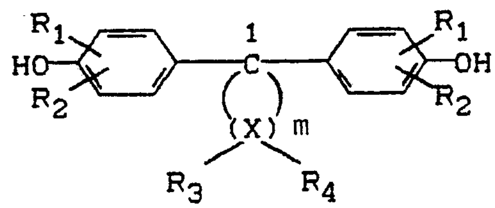

(I),

in welcher

$R_1$ und $R_2$ unabhängig voneinander Wasserstoff, Halogen, $C_1$-$C_8$-Alkyl, $C_5$-$C_6$-Cycloalkyl, $C_6$-$C_{10}$-Aryl, $C_7$-$C_{12}$-Aralkyl und $C_7$-$C_{12}$-Alkyryl bedeuten,

m für die Zahl 4, 5, 6 oder 7,

$R_3$ und $R_4$ für jedes X individuell wählbar, unabhängig voneinander Wasserstoff oder $C_1$-$C_6$-Alkyl und X Kohlenstoff bedeuten,

mit der Maßgabe, daß an mindestens einem Atom X, $R_3$ und $R_4$ gleichzeitig Alkyl ist

sowie gegebenenfalls

c) 0 bis 80 Gewichts-Teile weitere Additive.

2. Verfahren zur Herstellung der Mischungen nach Anspruch 1 aus den Komponenten (a), (b) und gegebenenfalls (c), dadurch gekennzeichnet, daß man die Einzelkomponenten (a) und (b) bei Temperaturen von 250 °C bis 450 °C bei Schergefällen von 0,1 $s^{-1}$ bis 1000 $s^{-1}$ durch Kneten, Extrudieren oder andere Methoden in an sich bekannten Vermisch-Apparaturen vermengt.

3. Verwendung der Mischungen nach Anspruch 1 zur Herstellung geformter Körper.